# FASCICULE DE BREVET EUROPEEN

(11) **EP 4 455 538 B1**
(45) Date de publication et mention de la délivrance du brevet: **11.06.2025**
(21) Numéro de dépôt: 24169271.4
(22) Date de dépôt: 09.04.2024
(51) Int. Cl.: F17C 9/00

(54) **SYSTEME DE RECUPERATION DE DIHYDROGENE GAZEUX PRODUIT DANS UNE CONDUITE DE DISTRIBUTION DE DIHDYROGENE LIQUIDE D'UN AERONEF**
SYSTEM ZUR RÜCKGEWINNUNG VON GASFÖRMIGEM DIWASSERSTOFF AUS EINER LEITUNG ZUR ABGABE VON FLÜSSIGEM DIHDYROGEN AUS EINEM FLUGZEUG
SYSTEM FOR RECOVERING DIHYDROGEN GAS PRODUCED IN A LIQUID DIHDYROGEN DISTRIBUTION PIPE OF AN AIRCRAFT

(30) Priorité: 26.04.2023 FR 2304230
(43) Date de publication de la demande: 30.10.2024
(73) Titulaire: AIRBUS OPERATIONS (S.A.S.), 31060 Toulouse (FR)
(72) Inventeur: DEVASIGAMANI, Nandakumar, 31060 Toulouse (FR)
(74) Mandataire: Airbus-OPS SAS

(56) Documents cités:
- DE-A1- 102007 023 821
- FR-A1- 3 006 742
- US-A1- 2023 026 474

## Description

### DOMAINE TECHNIQUE

La présente invention concerne le domaine de la distribution de dihydrogène liquide et concerne plus particulièrement un système de récupération de dihydrogène gazeux produit par évaporation de dihydrogène liquide lors de sa circulation dans une conduite.

### ETAT DE LA TECHNIQUE ANTERIEURE

L'utilisation de dihydrogène dans les aéronefs, par exemple pour alimenter un moteur à hydrogène, nécessite le stockage de dihydrogène à l'état liquide et nécessite généralement de distribuer ou d'acheminer du dihydrogène à l'état liquide. Une difficulté liée à la distribution de dihydrogène liquide réside dans le fait qu'une conduite de distribution nécessite d'être à une température suffisamment faible pour que le dihydrogène reste à l'état liquide. Or, lorsque le dihydrogène commence à circuler dans une conduite initialement vide, ladite conduite est généralement à une température plus élevée et le dihydrogène liquide se vaporise lors de sa circulation dans la conduite. La conduite nécessite donc d'être refroidie avant que le dihydrogène puisse être utilisé dans des conditions appropriées à l'utilisation qui en est faite. Le refroidissement de la conduite doit alors être effectué lors d'une phase préalable à l'utilisation du dihydrogène et peut impliquer par exemple de faire circuler du dihydrogène liquide dans la conduite jusqu'à ce que le dihydrogène ne se vaporise plus lors de sa circulation.

Toutefois, lors d'une telle étape préalable de refroidissement, du dihydrogène gazeux est produit et ne peut pas être utilisé pour l'utilisation escomptée initialement. Le dihydrogène gazeux ainsi produit est alors généralement évacué, ce qui entraîne un gaspillage de dihydrogène.

Il est alors souhaitable de pallier ces inconvénients de l'état de la technique. Il est notamment souhaitable de fournir une solution qui permette d'empêcher le gaspillage de dihydrogène lors de la phase transitoire de refroidissement et qui permette d'utiliser le dihydrogène qui est vaporisé lors de ladite phase transitoire de refroidissement.

Le document DE 10 2007 023821 A1 décrit un système de récupération de dihydrogène gazeux selon l'art antérieur.

### EXPOSE DE L'INVENTION

Il est proposé ici un système de récupération de dihydrogène gazeux, le dihydrogène gazeux étant produit par évaporation de dihydrogène liquide dans une conduite de distribution agencée entre un réservoir principal de dihydrogène et un dispositif consommateur de dihydrogène, la conduite de distribution comprenant une pompe pour fournir du dihydrogène au dispositif consommateur de dihydrogène à une température prédéfinie et à une pression prédéfinie, le système de récupération de dihydrogène gazeux comprenant : un réservoir auxiliaire ; une conduite de dérivation, agencée entre la conduite de distribution et le réservoir auxiliaire, en aval de la pompe selon un sens de circulation du dihydrogène dans la conduite de distribution ; une première vanne contrôlée agencée sur la conduite de dérivation ; un module d'obtention d'une information représentative d'une température du dihydrogène dans la conduite de distribution, en amont de la pompe ; et un module de contrôle de la première vanne contrôlée configuré pour ouvrir la vanne contrôlée lorsque l'information représentative de la température du dihydrogène dans la conduite de distribution est supérieure à une valeur prédéterminée et pour fermer la première vanne contrôlée lorsque l'information représentative de la température du dihydrogène dans la conduite de distribution est inférieure ou égale à la valeur prédéterminée.

Ainsi, le dihydrogène gazeux produit par évaporation de dihydrogène liquide circulant dans la conduite de distribution, lors d'une phase transitoire de refroidissement de la conduite de distribution par exemple, peut être récupéré et stocké afin d'être utilisé. Le gaspillage de dihydrogène est ainsi évité.

Selon un mode de réalisation particulier, le système de récupération de dihydrogène gazeux comprend en outre une deuxième vanne contrôlée agencée sur la conduite de distribution en aval de la conduite de dérivation, et comprend un module de contrôle de ladite deuxième vanne contrôlée configuré pour fermer la deuxième vanne contrôlée lorsque la première vanne contrôlée est ouverte et pour ouvrir la deuxième vanne contrôlée lorsque la première vanne contrôlée est fermée.

Selon un mode de réalisation particulier, le système de récupération de dihydrogène gazeux comprend en outre au moins une conduite auxiliaire agencée entre le réservoir auxiliaire et un dispositif de stockage ou de consommation de dihydrogène, ledit dispositif de stockage ou de consommation de dihydrogène étant le réservoir principal et/ou le dispositif consommateur de dihydrogène et/ou un dispositif tiers.

Selon un mode de réalisation particulier, le système de récupération de dihydrogène gazeux comprend en outre une troisième vanne contrôlée agencée sur chaque conduite auxiliaire et comprenant un module de contrôle de la troisième vanne contrôlée configuré pour ouvrir ladite troisième vanne contrôlée lorsqu'une utilisation de dihydrogène est requise par le dispositif de stockage ou de consommation de dihydrogène relié par ladite conduite auxiliaire, et pour fermer ladite troisième vanne contrôlée sinon.

Selon un mode de réalisation particulier, le réservoir auxiliaire présente un volume de stockage de dihydrogène gazeux prévu pour maintenir la pression de dihydrogène gazeux à l'intérieur dudit réservoir auxiliaire à une valeur supérieure ou égale à une pression prédéfinie.

Selon un mode de réalisation particulier, le système de récupération de dihydrogène gazeux comprend en outre une conduite d'évacuation reliant le réservoir auxiliaire à une extrémité de la conduite d'évacuation débouchant à l'air libre, comprend en outre une vanne d'arrêt agencée sur la conduite d'évacuation et comprend en outre des moyens configurés pour ouvrir la vanne d'arrêt lorsque la pression de dihydrogène gazeux dans le réservoir auxiliaire dépasse une valeur seuil prédéfinie de pression et pour fermer la vanne d'arrêt lorsque la pression de dihydrogène gazeux dans le réservoir auxiliaire est inférieure ou égale à ladite valeur seuil prédéfinie de pression.

Il est aussi proposé un aéronef comprenant un système de récupération de dihydrogène gazeux dans l'un quelconque de ses modes de réalisation.

Il est aussi proposé ici un procédé de récupération de dihydrogène gazeux, le dihydrogène gazeux étant produit par évaporation de dihydrogène liquide dans une conduite de distribution agencée entre un réservoir principal et un dispositif consommateur de dihydrogène, la conduite de distribution comprenant une pompe pour fournir du dihydrogène au dispositif consommateur de dihydrogène à une température prédéfinie et à une pression prédéfinie, le procédé de récupération de dihydrogène gazeux comprenant : récupérer du dihydrogène gazeux depuis la conduite de distribution vers une conduite de dérivation, agencée entre la conduite de distribution et un réservoir auxiliaire, en aval de la pompe selon un sens de circulation du dihydrogène dans la conduite de distribution ; stocker le dihydrogène gazeux dans le réservoir auxiliaire ; obtenir une information représentative d'une température du dihydrogène dans la conduite de distribution, en amont de la pompe ; et contrôler une première vanne contrôlée agencée sur la conduite de dérivation de sorte à ouvrir la première vanne contrôlée lorsque l'information représentative de la température du dihydrogène dans la conduite de distribution est supérieure à une valeur prédéterminée et fermer la première vanne contrôlée lorsque l'information représentative de la température du dihydrogène dans la conduite de distribution est inférieure ou égale à la valeur prédéterminée.

Selon un mode de réalisation particulier, le procédé de récupération de dihydrogène gazeux comprend en outre d'utiliser le dihydrogène gazeux stocké via au moins une conduite auxiliaire agencée entre le réservoir auxiliaire et un dispositif de stockage ou de consommation de dihydrogène, ledit dispositif de stockage ou de consommation de dihydrogène étant le réservoir principal et/ou le dispositif consommateur de dihydrogène et/ou un dispositif tiers.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de récupération de dihydrogène gazeux ;
[Fig. 2A] illustre schématiquement une conduite auxiliaire du système de récupération de dihydrogène gazeux agencée entre le réservoir auxiliaire et un dispositif consommateur de dihydrogène, selon un mode de réalisation particulier ;
[Fig. 2B] illustre schématiquement une conduite auxiliaire du système de récupération de dihydrogène gazeux agencée entre un réservoir auxiliaire et un réservoir principal, selon un mode de réalisation particulier ;
[Fig. 3] illustre schématiquement un procédé de récupération de dihydrogène gazeux ; et
[Fig. 4] illustre schématiquement un aéronef comprenant le système de récupération de dihydrogène gazeux.

### EXPOSE DETAILLE DE MODES DE REALISATION

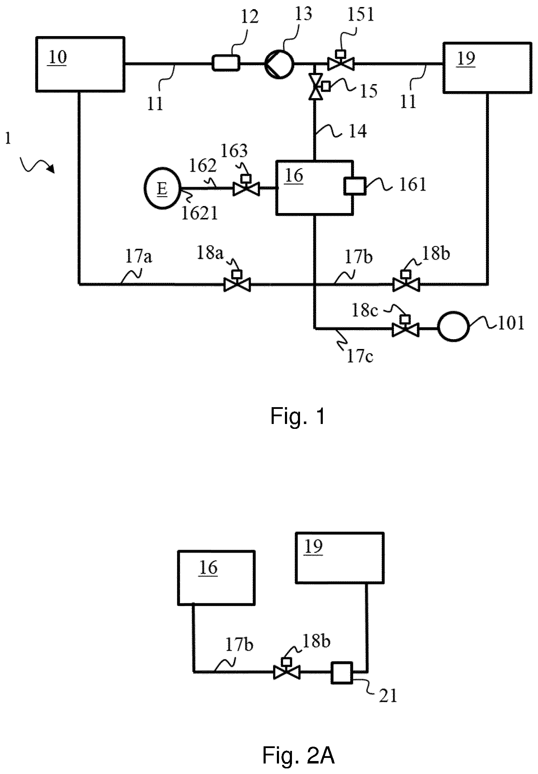

La **Fig. 1** illustre ainsi schématiquement un système de récupération 1 de dihydrogène gazeux.

Le dihydrogène gazeux est produit par évaporation de dihydrogène liquide circulant dans une conduite de distribution 11 agencée entre un réservoir principal 10 et un dispositif consommateur de dihydrogène 19. Le réservoir principal 10 est un réservoir de dihydrogène liquide. Le dispositif consommateur de dihydrogène 19 est par exemple un moteur à hydrogène, utilisant du dihydrogène comme carburant. La conduite de distribution 11 est destinée à acheminer du dihydrogène dans un sens de circulation du dihydrogène, depuis le réservoir principal 10 jusqu'au dispositif consommateur de dihydrogène 19. Selon ledit sens de circulation du dihydrogène, le terme amont est défini, par rapport à la conduite de distribution 11, comme une position relative située plus près du réservoir principal 10 tandis que le terme aval est défini, par rapport à la conduite de distribution 11, comme une position relative située plus près du dispositif consommateur de dihydrogène 19.

La conduite de distribution 11 comprend une pompe 13, par exemple une pompe haute pression destinée à alimenter le dispositif consommateur de dihydrogène 19. La pompe 13 est configurée pour fournir au dispositif consommateur de dihydrogène 19, autrement dit en aval de ladite pompe 13 du dihydrogène à des conditions de température et de pression prédéfinies à partir de dihydrogène liquide afin de permettre un bon fonctionnement du dispositif consommateur de dihydrogène 19. Lors d'une phase de fonctionnement nominal du dispositif consommateur de dihydrogène 19, le dihydrogène doit rester à l'état liquide dans une portion de la conduite de distribution 11 située entre le réservoir principal 10 et la pompe 13. En revanche, lors d'une phase préalable de refroidissement de la conduite de distribution 11 pendant laquelle des parois de la conduite de distribution 11 se refroidissent au contact du dihydrogène liquide provenant du réservoir principal 10, le dihydrogène circulant dans la conduite de distribution 11 se vaporise. La pompe 13 reçoit alors du dihydrogène gazeux et ne peut donc pas fournir du dihydrogène auxdites conditions de température et de pression prédéfinies.

Le système de récupération 1 comprend une conduite de dérivation 14, agencée entre la conduite de distribution 11 et un réservoir auxiliaire 16 de stockage de dihydrogène gazeux. La conduite de dérivation 14 est reliée à la conduite de distribution 11 en une position de ladite conduite de distribution 11 située en aval de la pompe selon le sens de circulation du dihydrogène dans la conduite de distribution 11.

Le système de récupération 1 comprend en outre le réservoir auxiliaire 16 de stockage de dihydrogène gazeux.

Le système de récupération 1 comprend en outre une première vanne contrôlée 15 agencée sur la conduite de dérivation 14. La première vanne contrôlée 15 peut être ouverte ou fermée.

Le système de récupération 1 comprend en outre un module d'obtention 12 d'une information représentative d'une température du dihydrogène dans la conduite de distribution 11 en amont de la pompe 13. Le module d'obtention 12 est par exemple un capteur de température.

Le système de récupération 1 comprend en outre un premier module de contrôle (non représenté) de la première vanne contrôlée 15 configuré pour ouvrir la première vanne contrôlée 15 lorsque l'information représentative de la température du dihydrogène dans la conduite de distribution 11 est supérieure à une valeur prédéterminée et pour fermer la première vanne contrôlée 15 lorsque l'information représentative de la température du dihydrogène dans la conduite de distribution 11 est inférieure ou égale à la valeur prédéterminée.

La valeur prédéterminée est par exemple une valeur de température à laquelle le dihydrogène se vaporise, autrement dit passe de l'état liquide à l'état gazeux, et est égale à -252,87°C ou 20,28 K. Ainsi, lorsque le dihydrogène circulant dans la conduite de distribution 11 en amont de la pompe 13 est gazeux, la première vanne contrôlée 15 est ouverte et le dihydrogène gazeux est récupéré dans la conduite de dérivation 14. En revanche, lorsque le dihydrogène circulant dans la conduite de distribution 11 en amont de la pompe 13 est gazeux, la première vanne contrôlée 15 est fermée et le dihydrogène liquide reste dans la conduite de distribution 11.

Lorsque la première vanne contrôlée 15 est ouverte, le dihydrogène récupéré dans la conduite de dérivation 14 circule depuis la conduite de distribution 11 vers le réservoir auxiliaire 16.

Selon un exemple de réalisation, le système de récupération 1 comprend en outre une deuxième vanne contrôlée 151 agencée sur la conduite de distribution en aval de la conduite de dérivation. Le système de récupération 1 comprend en outre un deuxième module de contrôle (non représenté) de ladite deuxième vanne contrôlée 151 configuré pour fermer la deuxième vanne contrôlée 151 lorsque la première vanne contrôlée 15 est ouverte. Ainsi, la récupération du dihydrogène gazeux circulant dans la conduite de distribution 11 est maximisée puisque la circulation du dihydrogène gazeux jusqu'au dispositif consommateur de dihydrogène 19 est empêchée. Le deuxième module de contrôle de ladite deuxième vanne contrôlée 151 est en outre configuré pour ouvrir la deuxième vanne contrôlée 151 lorsque la première vanne contrôlée 15 est ouverte, de sorte à permettre au dihydrogène circulant dans la conduite de distribution 11 de circuler jusqu'au dispositif consommateur de dihydrogène 19.

Le système de récupération 1 comprend en outre au moins une conduite auxiliaire 17a, 17b, 17c agencée entre le réservoir auxiliaire 16 et un dispositif de stockage ou de consommation de dihydrogène 10, 19, 101. Par exemple, le dispositif de stockage ou de consommation de dihydrogène est le réservoir principal 10, ou le dispositif consommateur de dihydrogène 19 ou un dispositif tiers 101.

Selon l'exemple illustré en Fig. 1, le système de récupération 1 comprend une première conduite auxiliaire 17a agencée entre le réservoir auxiliaire 16 et le réservoir principal 10, une deuxième conduite auxiliaire 17b agencée entre le réservoir auxiliaire 16 et le dispositif consommateur de dihydrogène 19 et une troisième conduite auxiliaire 17c agencée entre le réservoir auxiliaire 16 et le dispositif tiers 101. Le dispositif tiers est par exemple un mélangeur de dihydrogène destiné à réchauffer un flux externe de dihydrogène destiné à opérer un échange thermique avec un fluide caloporteur de sorte que le fluide caloporteur ne gèle pas lors dudit échange thermique.

Selon un mode de réalisation, le système de récupération 1 comprend une troisième vanne contrôlée 18a, 18b, 18c agencée sur chaque conduite auxiliaire 17a, 17b, 17c. Chaque troisième vanne contrôlée 18a, 18b, 18c est contrôlée par un troisième module de contrôle associé au dispositif de stockage ou de consommation de dihydrogène 10, 19, 101 relié par la conduite auxiliaire 17a, 17b, 17c en question.

Le troisième module de contrôle est configuré pour ouvrir la troisième vanne contrôlée 18a, 18b, 18c lorsqu'une utilisation de dihydrogène est requise par le dispositif de stockage ou de consommation de dihydrogène 10, 19, 101 en question. Le troisième module de contrôle est configuré pour fermer ladite la troisième vanne contrôlée 18a, 18b, 18c lorsque l'utilisation de dihydrogène n'est pas requise par le dispositif de stockage ou de consommation de dihydrogène 10, 19, 101 en question.

Par exemple, le troisième module de contrôle associé à la troisième vanne contrôlée 18a agencée sur la première conduite auxiliaire 17a ouvre ladite troisième vanne contrôlée 18a lorsqu'une re pressurisation du réservoir principal 10 est requise, et ferme ladite troisième vanne contrôlée 18a lorsque la re pressurisation du réservoir principal 10 n'est pas requise.

Selon un autre exemple, le troisième module de contrôle associé à la troisième vanne contrôlée 18b agencée sur la deuxième conduite auxiliaire 17b ouvre ladite troisième vanne contrôlée lorsqu'un démarrage du dispositif consommateur de dihydrogène 19 est requis. Ledit troisième module de contrôle ferme ladite troisième vanne contrôlée 18b lorsque le démarrage du dispositif consommateur de dihydrogène 19 n'est pas requis, autrement dit avant le démarrage du dispositif consommateur de dihydrogène 19 ou lorsque le démarrage est terminé.

Selon un mode de réalisation, le réservoir auxiliaire 16 comprend un dispositif de chauffage 161 électrique. Le dispositif de chauffage 161 est configuré pour augmenter la température du dihydrogène gazeux stocké dans ledit réservoir auxiliaire 16 lorsqu'une température du dihydrogène gazeux stocké dans le réservoir auxiliaire 16 est inférieure à une température prédéfinie. Selon un exemple, le système de récupération 1 comprend la deuxième conduite auxiliaire 17b, le dispositif consommateur de dihydrogène 19 est un moteur à hydrogène et la température prédéfinie est une température minimale de dihydrogène gazeux nécessaire pour démarrer un moteur à hydrogène. Ainsi, il est possible d'obtenir et utiliser du dihydrogène gazeux à une température prédéfinie pour démarrer le moteur à hydrogène.

Selon un mode de réalisation, le réservoir auxiliaire 16 présente un volume de stockage de dihydrogène gazeux prévu, conçu et adapté pour maintenir la pression de dihydrogène gazeux à l'intérieur dudit réservoir auxiliaire 16 à une valeur supérieure ou égale à une pression prédéfinie, par exemple à 3 bar. Le volume du réservoir auxiliaire 16 est conçu en tenant compte d'une quantité de dihydrogène gazeux pouvant être récupéré dans ledit réservoir auxiliaire 16 lors de la phase préalable de refroidissement de la conduite de distribution 11.

Selon un mode de réalisation, le système de récupération 1 comprend en outre une conduite d'évacuation 162 reliant le réservoir auxiliaire 16 à une extrémité 1621 de la conduite d'évacuation 162 débouchant à l'air libre, par exemple à l'extérieur E d'un aéronef 4. Le système de récupération 1 comporte en outre une vanne d'arrêt 163 agencée sur la conduite d'évacuation 162 et comporte des moyens d'ouverture de la vanne d'arrêt 163 lorsque la pression de dihydrogène gazeux dans le réservoir auxiliaire 16 dépasse une valeur seuil prédéfinie de pression et de fermeture de la vanne d'arrêt 163 lorsque la pression de dihydrogène gazeux dans le réservoir auxiliaire 16 est inférieure ou égale à ladite valeur seuil prédéfinie de pression. Ainsi, l'accumulation de dihydrogène gazeux au-delà d'une pression prédéfinie est empêchée. Selon un exemple, la vanne d'arrêt 163 s'ouvre sous une action mécanique résultant d'une pression exercée par un gaz provenant du réservoir auxiliaire 16 lorsque ladite pression dépasse la valeur seuil prédéfinie de pression et se ferme sinon. Selon un autre exemple, les moyens d'ouverture et de fermeture de la vanne d'arrêt comprennent un capteur de pression permettant d'obtenir une information représentative de la pression à l'intérieur du réservoir auxiliaire 16 et comprennent un module de contrôle de la vanne d'arrêt 163. Le module de contrôle de la vanne d'arrêt 163 est configuré pour ouvrir la vanne d'arrêt 163 lorsque l'information représentative de la pression de dihydrogène dans le réservoir auxiliaire 16 dépasse la valeur seuil prédéfinie de pression et pour fermer la vanne d'arrêt 163 sinon. Le module de contrôle de la vanne d'arrêt 163 comprend un processeur capable d'exécuter des instructions chargées dans une mémoire, causant l'implémentation des étapes d'ouverture et de fermeture de la vanne d'arrêt 163. Le module de contrôle peut comprendre un processeur de type DSP (« Digital Signal Processor » en anglais) ou un microcontrôleur, ou une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Specific Integrated Circuit » en anglais). D'une manière générale, le module de contrôle de la vanne d'arrêt 163, tout comme chaque module de contrôle d'une vanne décrit ici, comporte de la circuiterie électronique adaptée et configurée pour implémenter les fonctionnements, procédés et étapes décrits ici en relation avec ledit module de contrôle.

La **Fig. 2A** illustre schématiquement la deuxième conduite auxiliaire 17b du système de récupération 1 agencée entre le réservoir auxiliaire 16 et le dispositif consommateur de dihydrogène 19, selon un mode de réalisation particulier.

Selon ledit mode de réalisation particulier, ladite deuxième conduite auxiliaire 17b comprend un régulateur de pression 21 de dihydrogène gazeux. Le régulateur de pression 21 est par exemple un limitateur de pression tel qu'un orifice agencé dans la deuxième conduite auxiliaire 17b.

Ainsi, une variation de pression du dihydrogène gazeux dans le réservoir auxiliaire 16 et dans la deuxième conduite auxiliaire 17b résultant d'une variation de volume de dihydrogène gazeux accumulé dans le réservoir auxiliaire 16 a un effet limité lors d'une injection de dihydrogène gazeux, via ladite deuxième conduite auxiliaire 17a, dans le dispositif consommateur de dihydrogène 19.

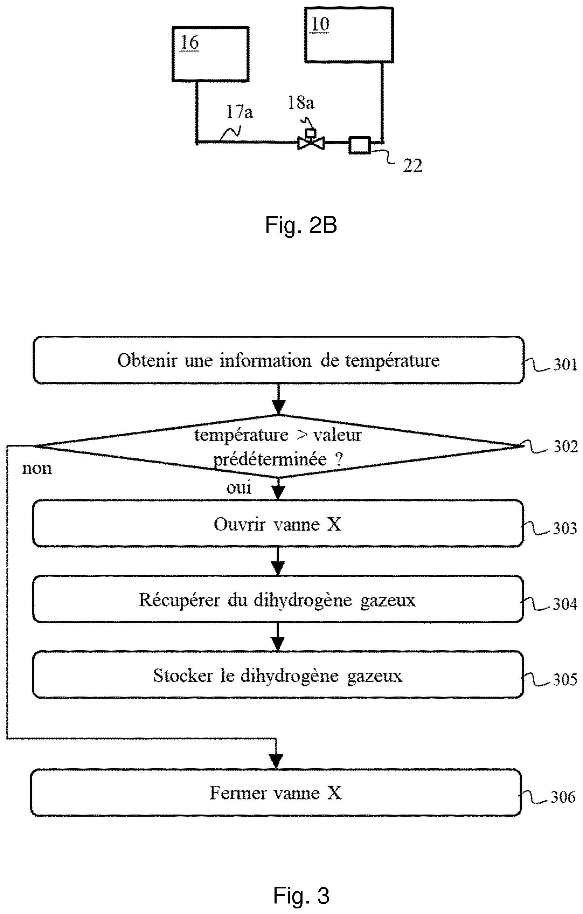

La **Fig. 2B** illustre schématiquement la première conduite auxiliaire 17a du système de récupération 1 agencée entre le réservoir auxiliaire 16 et le réservoir principal 10, selon un mode de réalisation particulier.

Selon ledit mode de réalisation particulier, ladite première conduite auxiliaire 17a comprend un contrôleur de débit massique 22. Le contrôleur de débit massique 22 permet de contrôler un flux massique de dihydrogène gazeux circulant jusqu'au réservoir principal 10. Ainsi, il est possible de contrôler le débit de dihydrogène gazeux injecté dans le réservoir principal 10 afin d'assurer que la quantité de dihydrogène gazeux injectée dans ledit réservoir principal 10 soit suffisante pour permettre une re pressurisation dudit réservoir principal 10.

La **Fig. 3** illustre schématiquement un procédé de récupération de dihydrogène gazeux.

Selon un mode de réalisation, le procédé de récupération de dihydrogène gazeux est déclenché à intervalles réguliers, par exemple toutes les secondes.

Dans une étape 301, le module d'obtention 12 d'une information représentative d'une température du dihydrogène dans la conduite de distribution 11 en amont de la pompe 13 obtient ladite information représentative d'une température du dihydrogène.

Dans une étape 302 suivante, le premier module de contrôle de la première vanne contrôlée 15 compare ladite information représentative d'une température de dihydrogène à la valeur prédéterminée de température. Si l'information représentative d'une température de dihydrogène est supérieure à la valeur prédéterminée, le premier module de contrôle effectue une étape 303. Sinon, le premier module de contrôle effectue une étape 306.

A l'étape 303, le premier module de contrôle de la première vanne contrôlée 15 ouvre ladite première vanne contrôlée 15 ou en maintient l'ouverture lorsque ladite première vanne contrôlée 15 est déjà ouverte.

Selon un mode de réalisation particulier, lorsque le système de récupération comprend la deuxième vanne contrôlée 151, le deuxième module de contrôle ferme ou maintient la fermeture de ladite deuxième vanne contrôlée 151.

Dans une étape 304 suivante, le dihydrogène gazeux de la conduite de distribution 11 est récupéré dans la conduite de dérivation 14.

Dans une étape 305 suivante, le dihydrogène gazeux récupéré dans la conduite de dérivation 14 est stocké dans le réservoir auxiliaire 16.

A l'étape 306, le module de contrôle de la première vanne contrôlée 15 ferme ladite première vanne contrôlée 15 ou en maintient la fermeture lorsque ladite première vanne contrôlée 15 est déjà fermée.

Selon un mode de réalisation particulier, lorsque le système de récupération comprend la deuxième vanne contrôlée 151, le deuxième module de contrôle ouvre ou maintient l'ouverture de ladite deuxième vanne contrôlée 151.

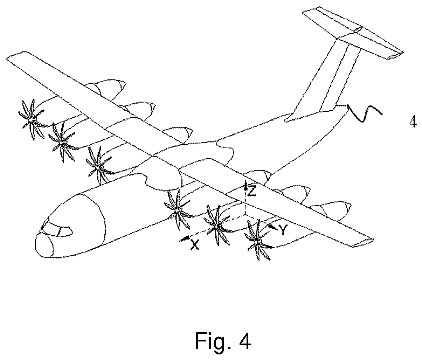

La **Fig. 4** illustre schématiquement l'aéronef 4 comprenant le système de récupération 1 de dihydrogène gazeux, particulièrement avantageux pour une utilisation à bord d'un aéronef dans la mesure où il permet d'optimiser la consommation de dihydrogène en réduisant les pertes.

## Revendications

1. Système de récupération (1) de dihydrogène gazeux comprenant une conduite de distribution (11) agencée entre un réservoir principal (10) et un dispositif consommateur de dihydrogène (19), la conduite de distribution (11) comprenant une pompe (13) pour fournir du dihydrogène au dispositif consommateur de dihydrogène (19) à une température prédéfinie et à une pression prédéfinie, le dihydrogène gazeux étant produit par évaporation de dihydrogène liquide dans la conduite de distribution (11),
le système de récupération (1) de dihydrogène gazeux comprenant:
- un réservoir auxiliaire (16),
- une conduite de dérivation (14), agencée entre la conduite de distribution (11) et le réservoir auxiliaire (16), en aval de la pompe (13) selon un sens de circulation du dihydrogène dans la conduite de distribution (11),
- une première vanne contrôlée (15) agencée sur la conduite de dérivation (14),
- un module d'obtention (12) d'une information représentative d'une température du dihydrogène dans la conduite de distribution (11), en amont de la pompe (13), et
- un module de contrôle de la première vanne contrôlée (15) configuré pour ouvrir la vanne contrôlée lorsque l'information représentative de la température du dihydrogène dans la conduite de distribution est supérieure à une valeur prédéterminée et pour fermer la première vanne contrôlée lorsque l'information représentative de la température du dihydrogène dans la conduite de distribution est inférieure ou égale à la valeur prédéterminée.

2. Système de récupération de dihydrogène gazeux selon la revendication 1, comprenant en outre une deuxième vanne contrôlée (151) agencée sur la conduite de distribution (11) en aval de la conduite de dérivation (14), et comprenant un module de contrôle de ladite deuxième vanne contrôlée (151) configuré pour fermer la deuxième vanne contrôlée (151) lorsque la première vanne contrôlée (15) est ouverte et pour ouvrir la deuxième vanne contrôlée (151) lorsque la première vanne contrôlée (15) est fermée.

3. Système de récupération de dihydrogène gazeux selon la revendication 1 ou 2, comprenant en outre au moins une conduite auxiliaire (17a, 17b, 17c) agencée entre le réservoir auxiliaire (16) et un dispositif de stockage ou de consommation de dihydrogène (10, 19, 101), ledit dispositif de stockage ou de consommation de dihydrogène étant le réservoir principal (10) et/ou le dispositif consommateur de dihydrogène (19) et/ou un dispositif tiers (101).

4. Système de récupération (1) de dihydrogène gazeux selon la revendication 3, comprenant en outre une troisième vanne contrôlée (18a, 18b, 18c) agencée sur chaque conduite auxiliaire (17a, 17b, 17c) et comprenant un module de contrôle de la troisième vanne contrôlée (18a, 18b, 18c) configuré pour ouvrir ladite troisième vanne contrôlée lorsqu'une utilisation de dihydrogène est requise par le dispositif de stockage ou de consommation de dihydrogène (10, 19, 101) relié par ladite conduite auxiliaire (17a, 17b, 17c), et pour fermer ladite troisième vanne contrôlée sinon.

5. Système de récupération (1) de dihydrogène gazeux selon l'une quelconque des revendications 1 à 4, dans lequel le réservoir auxiliaire (16) présente un volume de stockage de dihydrogène gazeux prévu pour maintenir la pression de dihydrogène gazeux à l'intérieur dudit réservoir auxiliaire (16) à une valeur supérieure ou égale à une pression prédéfinie.

6. Système de récupération (1) de dihydrogène gazeux selon l'une quelconque des revendications 1 à 5, comprenant en outre une conduite d'évacuation (162) reliant le réservoir auxiliaire (16) à une extrémité (1621) de la conduite d'évacuation (162) débouchant à l'air libre, comprenant en outre une vanne d'arrêt (163) agencée sur la conduite d'évacuation (162) et comprenant en outre des moyens configurés pour ouvrir la vanne d'arrêt (163) lorsque la pression de dihydrogène gazeux dans le réservoir auxiliaire (16) dépasse une valeur seuil prédéfinie de pression et pour fermer la vanne d'arrêt (163) lorsque la pression de dihydrogène gazeux dans le réservoir auxiliaire (16) est inférieure ou égale à ladite valeur seuil prédéfinie de pression.

7. Aéronef (4) comprenant un système de récupération (1) de dihydrogène gazeux selon l'une quelconque des revendications 1 à 6.

8. Procédé de récupération de dihydrogène gazeux, le dihydrogène gazeux étant produit par évaporation de dihydrogène liquide dans une conduite de distribution (11) agencée entre un réservoir principal (10) et un dispositif consommateur de dihydrogène (19), la conduite de distribution (11) comprenant une pompe (13) pour fournir du dihydrogène au dispositif consommateur de dihydrogène (19) à une température prédéfinie et à une pression prédéfinie,
le procédé de récupération de dihydrogène gazeux comprenant:
- récupérer (304) du dihydrogène gazeux depuis la conduite de distribution vers une conduite de dérivation, agencée entre la conduite de distribution et un réservoir auxiliaire, en aval de la pompe selon un sens de circulation du dihydrogène dans la conduite de distribution,
- stocker (305) le dihydrogène gazeux dans le réservoir auxiliaire,
- obtenir (301) une information représentative d'une température du dihydrogène dans la conduite de distribution, en amont de la pompe, et
- contrôler (302) une première vanne contrôlée agencée sur la conduite de dérivation de sorte à ouvrir (303) la première vanne contrôlée lorsque l'information représentative de la température du dihydrogène dans la conduite de distribution est supérieure à une valeur prédéterminée et fermer (306) la première vanne contrôlée lorsque l'information représentative de la température du dihydrogène dans la conduite de distribution est inférieure ou égale à la valeur prédéterminée.

9. Procédé de récupération de dihydrogène gazeux selon la revendication 8 comprenant en outre :
- utiliser le dihydrogène gazeux stocké via au moins une conduite auxiliaire agencée entre le réservoir auxiliaire et un dispositif de stockage ou de consommation de dihydrogène, ledit dispositif de stockage ou de consommation de dihydrogène étant le réservoir principal et/ou le dispositif consommateur de dihydrogène et/ou un dispositif tiers.

## Patentansprüche

1. System zur Rückgewinnung (1) von gasförmigem Diwasserstoff, beinhaltend eine Abgabeleitung (11), die zwischen einem Haupttank (10) und einer Diwasserstoffverbrauchsvorrichtung (19) angeordnet ist, wobei die Abgabeleitung (11) eine Pumpe (13) beinhaltet, um der Diwasserstoffverbrauchsvorrichtung (19) Diwasserstoff mit einer vordefinierten Temperatur und einem vordefinierten Druck zu liefern, wobei der gasförmige Diwasserstoff durch Verdampfung von flüssigem Diwasserstoff in der Abgabeleitung (11) entsteht,
wobei das System zur Rückgewinnung (1) von gasförmigem Diwasserstoff Folgendes beinhaltet:
- einen Zusatztank (16),
- eine Abzweigleitung (14), die, gemäß einer Zirkulationsrichtung des Diwasserstoffs in der Abgabeleitung (11), stromabwärts der Pumpe (13) zwischen der Abgabeleitung (11) und dem Zusatztank (16) angeordnet ist,
- ein erstes gesteuertes Ventil (15), das in der Abzweigleitung (14) angeordnet ist,
- ein Modul zum Erhalten (12) einer Information, die für eine Temperatur des Diwasserstoffs in der Abgabeleitung (11) repräsentativ ist, stromaufwärts der Pumpe (13) und
- ein Steuermodul für das erste gesteuerte Ventil (15), das dazu konfiguriert ist, das gesteuerte Ventil zu öffnen, wenn die für die Temperatur des Diwasserstoffs in der Abgabeleitung repräsentative Information größer als ein vorbestimmter Wert ist, und das erste gesteuerte Ventil zu schließen, wenn die für die Temperatur des Diwasserstoffs in der Abgabeleitung repräsentative Information kleiner als oder gleich dem vorbestimmten Wert ist.

2. System zur Rückgewinnung von gasförmigem Diwasserstoff nach Anspruch 1, ferner beinhaltend ein zweites gesteuertes Ventil (151), das stromabwärts der Abzweigleitung (14) in der Abgabeleitung (11) angeordnet ist, und beinhaltend ein Steuermodul für das zweite gesteuerte Ventil (151), das dazu konfiguriert ist, das zweite gesteuerte Ventil (151) zu schließen, wenn das erste gesteuerte Ventil (15) geöffnet ist, und das zweite gesteuerte Ventil (151) zu öffnen, wenn das erste gesteuerte Ventil (15) geschlossen ist.

3. System zur Rückgewinnung von gasförmigem Diwasserstoff nach Anspruch 1 oder 2, ferner beinhaltend mindestens eine Zusatzleitung (17a, 17b, 17c), die zwischen dem Zusatztank (16) und einer Vorrichtung für die Speicherung oder den Verbrauch von Diwasserstoff (10, 19, 101) angeordnet ist, wobei die Vorrichtung für die Speicherung oder den Verbrauch von Diwasserstoff der Haupttank (10) und/oder die Diwasserstoffverbrauchsvorrichtung (19) und/oder eine dritte Vorrichtung (101) ist.

4. System zur Rückgewinnung (1) von gasförmigem Diwasserstoff nach Anspruch 3, ferner beinhaltend ein drittes gesteuertes Ventil (18a, 18b, 18c), das in jeder Zusatzleitung (17a, 17b, 17c) angeordnet ist, und beinhaltend ein Steuermodul für das dritte gesteuerte Ventil (18a, 18b, 18c), das dazu konfiguriert ist, das dritte gesteuerte Ventil zu öffnen, wenn eine Verwendung von Diwasserstoff durch die Vorrichtung für die Speicherung oder den Verbrauch von Diwasserstoff (10, 19, 101), die durch die Zusatzleitung (17a, 17b, 17c) verbunden ist, erforderlich ist, und andernfalls das dritte gesteuerte Ventil zu schließen.

5. System zur Rückgewinnung (1) von gasförmigem Diwasserstoff nach einem der Ansprüche 1 bis 4, wobei der Zusatztank (16) ein Speichervolumen für gasförmigen Diwasserstoff aufweist, das dazu vorgesehen ist, den Druck von gasförmigem Diwasserstoff innerhalb des Zusatztanks (16) auf einem Wert zu halten, der größer als oder gleich einem vordefinierten Druck ist.

6. System zur Rückgewinnung (1) von gasförmigem Diwasserstoff nach einem der Ansprüche 1 bis 5, ferner beinhaltend eine Evakuierungsleitung (162), die den Zusatztank (16) mit einem Ende (1621) der Evakuierungsleitung (162), das im Freien mündet, verbindet, ferner beinhaltend ein Absperrventil (163), das in der Evakuierungsleitung (162) angeordnet ist, und ferner beinhaltend Mittel, die dazu konfiguriert sind, das Absperrventil (163) zu öffnen, wenn der Druck von gasförmigem Diwasserstoff in dem Zusatztank (16) einen vordefinierten Druckschwellenwert überschreitet, und das Absperrventil (163) zu schließen, wenn der Druck von gasförmigem Diwasserstoff in dem Zusatztank (16) kleiner als oder gleich dem vordefinierten Druckschwellenwert ist.

7. Flugzeug (4), beinhaltend ein System zur Rückgewinnung (1) von gasförmigem Diwasserstoff nach einem der Ansprüche 1 bis 6.

8. Verfahren zur Rückgewinnung von gasförmigem Diwasserstoff, wobei der gasförmige Diwasserstoff durch Verdampfung von flüssigem Diwasserstoff in einer Abgabeleitung (11), die zwischen einem Haupttank (10) und einer Diwasserstoffverbrauchsvorrichtung (19) angeordnet ist, entsteht, wobei die Abgabeleitung (11) eine Pumpe (13) beinhaltet, um der Diwasserstoffverbrauchsvorrichtung (19) Diwasserstoff mit einer vordefinierten Temperatur und einem vordefinierten Druck zu liefern,
wobei das Verfahren zur Rückgewinnung von gasförmigem Diwasserstoff Folgendes beinhaltet:
- Rückgewinnen (304) von gasförmigem Diwasserstoff aus der Abgabeleitung in eine Abzweigleitung, die, gemäß einer Zirkulationsrichtung des Diwasserstoffs in der Abgabeleitung, stromabwärts der Pumpe zwischen der Abgabeleitung und einem Zusatztank angeordnet ist,
- Speichern (305) des gasförmigen Diwasserstoffs in dem Zusatztank,
- Erhalten (301) einer Information, die für eine Temperatur des Diwasserstoffs in der Abgabeleitung repräsentativ ist, stromaufwärts der Pumpe und
- Steuern (302) eines ersten gesteuerten Ventils, das in der Abzweigleitung angeordnet ist, um das erste gesteuerte Ventil zu öffnen (303), wenn die für die Temperatur des Diwasserstoffs in der Abgabeleitung repräsentative Information größer als ein vorbestimmter Wert ist, und das erste gesteuerte Ventil zu schließen (306), wenn die für die Temperatur des Diwasserstoffs in der Abgabeleitung repräsentative Information kleiner als oder gleich dem vorbestimmten Wert ist.

9. Verfahren zur Rückgewinnung von gasförmigem Diwasserstoff nach Anspruch 8, ferner beinhaltend:
- Verwenden des gespeicherten gasförmigen Diwasserstoffs mittels mindestens einer Zusatzleitung, die zwischen dem Zusatztank und einer Vorrichtung für die Speicherung oder den Verbrauch von Diwasserstoff angeordnet ist, wobei die Vorrichtung für die Speicherung oder den Verbrauch von Diwasserstoff der Haupttank und/oder die Diwasserstoffverbrauchsvorrichtung und/oder eine dritte Vorrichtung ist.

## Claims

1. Gaseous dihydrogen recovery system (1) comprising a distribution duct (11) arranged between a main tank (10) and a dihydrogen consumer device (19), the distribution duct (11) comprising a pump (13) for supplying dihydrogen to the dihydrogen consumer device (19) at a predefined temperature and at a predefined pressure, the gaseous dihydrogen being produced by evaporation of liquid dihydrogen in the distribution duct (11),
the gaseous dihydrogen recovery system (1) comprising:
- an auxiliary tank (16),
- a bypass duct (14) arranged between the distribution duct (11) and the auxiliary tank (16), downstream of the pump (13) in a direction of circulation of the dihydrogen in the distribution duct (11),
- a first controlled valve (15) arranged on the bypass duct (14),
- a module (12) for obtaining information representative of a temperature of the dihydrogen in the distribution duct (11), upstream of the pump (13), and
- a control module of the first controlled valve (15) configured to open the controlled valve when the information representative of the temperature of the dihydrogen in the distribution duct is greater than a predetermined value and to close the first controlled valve when the information representative of the temperature of the dihydrogen in the distribution duct is less than or equal to the predetermined value.

2. Gaseous dihydrogen recovery system according to Claim 1, further comprising a second controlled valve (151) arranged on the distribution duct (11) downstream of the bypass duct (14), and comprising a control module of said second controlled valve (151) configured to close the second controlled valve (151) when the first controlled valve (15) is open and to open the second controlled valve (151) when the first controlled valve (15) is closed.

3. Gaseous dihydrogen recovery system according to Claim 1 or 2, further comprising at least one auxiliary duct (17a, 17b, 17c) arranged between the auxiliary tank (16) and a dihydrogen storage or consumption device (10, 19, 101), said dihydrogen storage or consumption device being the main tank (10) and/or the dihydrogen consumer device (19) and/or a third-party device (101).

4. Gaseous dihydrogen recovery system (1) according to Claim 3, further comprising a third controlled valve (18a, 18b, 18c) arranged on each auxiliary duct (17a, 17b, 17c) and comprising a control module of the third controlled valve (18a, 18b, 18c) configured to open said third controlled valve when a use of dihydrogen is required by the dihydrogen storage or consumption device (10, 19, 101) linked by said auxiliary duct (17a, 17b, 17c), and to close said third controlled valve otherwise.

5. Gaseous dihydrogen recovery system (1) according to any one of Claims 1 to 4, wherein the auxiliary tank (16) has a gaseous dihydrogen storage volume provided to keep the gaseous dihydrogen pressure inside said auxiliary tank (16) at a value greater than or equal to a predefined pressure.

6. Gaseous dihydrogen recovery system (1) according to any one of Claims 1 to 5, further comprising a discharge duct (162) linking the auxiliary tank (16) to an end (1621) of the discharge duct (162) that emerges in the open air, further comprising a shut-off valve (163) arranged on the discharge duct (162) and further comprising means configured to open the shut-off valve (163) when the gaseous dihydrogen pressure in the auxiliary tank (16) exceeds a predefined pressure threshold value and to close the shut-off valve (163) when the gaseous dihydrogen pressure in the auxiliary tank (16) is less than or equal to said predefined pressure threshold value.

7. Aircraft (4) comprising a gaseous dihydrogen recovery system (1) according to any one of Claims 1 to 6.

8. Gaseous dihydrogen recovery method, the gaseous dihydrogen being produced by evaporation of liquid dihydrogen in a distribution duct (11) arranged between a main tank (10) and a dihydrogen consumer device (19), the distribution duct (11) comprising a pump (13) for supplying dihydrogen to the dihydrogen consumer device (19) at a predefined temperature and at a predefined pressure,
the gaseous dihydrogen recovery method comprising:
- recovering (304) gaseous dihydrogen from the distribution duct to a bypass duct, arranged between the distribution duct and an auxiliary tank, downstream of the pump in a direction of circulation of the dihydrogen in the distribution duct,
- storing (305) the gaseous dihydrogen in the auxiliary tank,
- obtaining (301) information representative of a temperature of the dihydrogen in the distribution duct, upstream of the pump, and
- controlling (302) a first controlled valve arranged on the bypass duct so as to open (303) the first controlled valve when the information representative of the temperature of the dihydrogen in the distribution duct is greater than a predetermined value and to close (306) the first controlled valve when the information representative of the temperature of the dihydrogen in the distribution duct is less than or equal to the predetermined value.

9. Gaseous dihydrogen recovery method according to Claim 8, further comprising:
- using the stored gaseous dihydrogen via at least one auxiliary duct arranged between the auxiliary tank and a dihydrogen storage or consumption device, said dihydrogen storage or consumption device being the main tank and/or the dihydrogen consumer device and/or a third-party device.
